Europäisches Patentamt

European Patent Office

Office européen des brevets

(11) Publication number: **0 444 217 A1**

# EUROPEAN PATENT APPLICATION
## published in accordance with Art. 158(3) EPC

(21) Application number: 90915224.1

(22) Date of filing: 21.08.90

(86) International application number:
PCT/SU90/00205

(87) International publication number:
WO 91/03673 (21.03.91 91/07)

(51) Int. Cl.⁵: **F16L 1/028**

(30) Priority: 06.09.89 SU 4735104
06.09.89 SU 4735116

(43) Date of publication of application:
04.09.91 Bulletin 91/36

(84) Designated Contracting States:
BE DE FR GB IT NL SE

(71) Applicant: INSTITUT GORNOGO DELA
SIBIRSKOGO OTDELENIA AKADEMII NAUK
SSSR
Krasny pr., 54
Novosibirsk, 630091(SU)

(72) Inventor: GRIGORASCHENKO, Vladimir
Alexandrovich
ul. Zheleznodorozhnaya, 8/1-176
Novosibirsk, 630104(SU)
Inventor: PLAVSKIKH, Vladimir Dmitrievich
ul. Planovaya, 30-7
Novosibirsk, 630117(SU)
Inventor: REIFISOV, Jury Borisovich
ul. Krasnoyarskaya, 32-65
Novosibirsk, 630132(SU)
Inventor: SYRYAMIN, Nikolai Dmitrievich
ul. Katodnaya, 21
Novosibirsk, 630047(SU)
Inventor: KURLENYA, Mikhail Vladimirovich
ul. Spartaka, 16-31
Novosibirsk, 630007(SU)
Inventor: NEFEDOV, Jury Ivanovich
ul. Akademika Bogvara, 7-1-30
Moscow, 123182(SU)
Inventor: ISAKOV, Alexandr Leonidovich
ul. D.Kovalchuk, 185-8
Novosibirsk, 630023(SU)
Inventor: KOSTYLEV, Alexandr Dmitrievich
ul. Derzhavina, 5-44
Novosibirsk, 630091(SU)
Inventor: RUDOVSKY, Valery Davydovich
ul. Cheljuskintsev, 14-175
Novosibirsk, 630004(SU)

(74) Representative: Godwin, Edgar James et al
MARKS & CLERK 57-60 Lincoln's Inn Fields
London, WC2A 3LS(GB)

(54) **METHOD FOR TRENCHLESS REPLACEMENT OF A PIPELINE.**

(57) A method for trenchless replacement of a pipeline, comprising the laying of a new pipeline (1) by way of arranging it coaxially with an old pipeline (2) and outside it, followed by extraction of the old pipeline (2).

## Technical Field

The invention relates to construction techniques and, more particularly, to a method for trenchless replacement of a pipeline.

At present, all over the world, particularly in highly developed countries, a scope of underground pipelines is quickly growing, which pipelines require replacement due to their ageing or reconstruction. Therefore, a problem of development and mastering of trenchless methods of performing the work on replacement of underground utility lines becomes very urgent and resides in the task to considerably cut down the cost and duration the work, prevent destruction of hard pavements, transport lines and roads and to prevent disturbance of the work of ground transport.

## Prior Art

Known in the art is a method for trenchless replacement of pipelines (advertized as Merstan pipeline services limited, the FRG), including the destruction of an old pipeline with the formation of fragments, ramming these fragments into the ground with simultaneous formation of a well and laying of a new pipeline into this well.

Realization of the above method involves compaction of the soil mass adjacent to the pipeline, which creates a meance of damaging other closely located underground utility lines by soil pressure. This makes it difficult to use said method under conditions of dense urban housing and high saturation of underground soil mass with various utility lines.

Besides, said method results in contamination of underground space with fragments of the old pipeline and in penetration into soil and ground waters of residual substances conveyed through the pipeline, for example, canalization sewage.

Known in the art is a method of trench less replacement of pipelines (advertized as Witte Bohrtechnik, the FRG), comprising the laying of a new pipeline and simultaneous removal of the old pipeline from the ground and its destruction.

The above method makes it possible to prevent a possibility of destruction of closely located utility lines, since its realization does not involve compaction of the soil mass surrounding the pipeline, and also prevents contamination of the underground soil mass.

However, it is difficult to use the above method for replacement of pipelines made from materials of low strength, for example, ceramics, or pipelines consisting of separate sections whose joints are not designed for transmitting considerable axial loads, and also decrease lateral stability of pipelines especially so in soft grounds. In this case it is necessary to take measures ensuring uniform distribution of extracting loads throughout the pipeline length and improvement of its lateral stability, for example, employment of a special distributing construction located inside the old pipeline. This complicates the use of the above method and renders it inconvenient for replacement of the abovementioned pipelines.

Moreover, further on in replacement of pipelines made from high-strength materials, for example, steel, which have been in operation for a long time and have defects, it is possible that they will be destroyed under the action of extraction loads in places of their defects, which renders their removal impossible.

Thus, the abovedescribed method is insufficiently reliable.

## Disclosure of the Invention

It is an object of the present invention to provide such a method of trenchless replacement of a pipeline which would ensure convenience and enhanced reliability of the process of extraction of an old pipeline irrespective of diverse structures and strength characteristics thereof.

This task has been accomplished due to the fact that in the claimed method of trenchless replacement of pipelines, comprising laying of a new pipeline and simultaneous removal of an old pipeline from the ground and its destruction, according to the invention, the new pipeline is arranged coaxially outside the old pipeline, whereupon the old pipeline is extracted.

Arrangement of the new pipeline outside the old one facilitates extraction of the old pipeline, irrespective of its condition and strength.

In laying the new pipeline whose diameter is close to that of the old pipeline, prior to arranging the new pipeline outside the old one, it is expedient that the old pipeline is destroyed.

This makes it possible to decrease resistance in laying the new pipeline owing to decreasing friction forces between the old and new pipelines.

It is expedient to effect destruction of the old pipeline by way of dividing it into longitudinal elements.

This makes it possible to replace pipelines made from plastic materials, reduces consumption of power for destruction of the old pipeline and renders it possible to lay it inside the old pipeline in the most compact way, and simplify its extraction.

It is expedient to effect destruction of the old pipeline by way of transmitting the breaking load onto it with the aid of the new pipeline.

Laying the new pipeline made from a strong material makes it possible to simplify the process of destroying the old pipeline, using for the purpose the same mechanism which was used for laying the new pipeline, and to synchronize the processes of destroying the old pipeline and laying the new one.

In laying the new pipeline whose diameter exceeds that of the old one, it is expedient to separate a layer of soil formed between the abovementioned pipelines from the old pipeline prior to its extraction.

This facilitates the process of extraction of the old pipeline, since it decreases the efforts required for its extraction.

In this case it is also expedient to separate the layer of soil formed between the pipelines from the old pipeline in the process of laying the new pipeline.

This facilitates the laying of the new pipeline, since it decreases the efforts required for its laying.

In laying the new pipeline by way of subjecting it to the action of a static load, it is expedient to transmit reactive forces to the old pipeline.

This makes it possible to dispense with the arrangement of a retaining wall or anchor devices when laying the new pipeline whose diameter exceeds that of the old one which simplifies the work performed.

In extracting the old pipeline by subjecting it to the action of a static load, it is expedient to transmit reactive forces to the newly laid pipeline.

This rules out the necessity to erect cumbersome structures in the form of a retaining wall or an anchor device adapted to take up reactive forces and transmit them onto ground.

It is expedient to subject the new pipeline to the action of a dynamic load.

This renders it possible to reduce friction forces of the new pipeline against the ground and decrease the value of the static load which is required for laying the new pipeline.

Besides, the action of the dynamic load on the newly laid pipeline facilitates destruction of structural connections in a layer of soil which is formed between the old and new pipelines and separation thereof from the surface of the old pipeline, which eases extraction of the latter.

In extracting the old pipeline, it is expedient to subject it to the action of a dynamic load.

This helps reduce the value of a static load necessary for extraction of the old pipeline, and decreases the danger of breaking the pipeline by extracting loads.

Thus, employment of the method of the invention ensures convenience and enhanced reliability of the process of extraction of the old pipeline irrespective of various designs and strength characteristics.

Brief Description of Drawings

The invention will be described further with reference to its exemplary embodiments and accompanying drawings, in which:

Figure 1 diagrammatically shows parts of the new and old pipelines whose diameters are similar when realizing the method of trenchless replacement of a pipeline, according to the invention, longitudinal section;

Figure 2 - the same parts, according to the invention, when breaking the old pipeline by separating it into longitudinal elements;

Figure 3 - section III-III in Figure 2;

Figure 4- the same parts in the process of laying the new pipeline, whose diameters are different, longitudinal section;

Figure 5 - the same parts upon completing the laying of the new pipeline, longitudinal section;

Figure 6 - the same parts in the process of extraction of the old pipeline, longitudinal section;

Figure 7 - the same parts ·in the process of laying the new pipeline when transmitting reactive forces onto the old pipeline, longitudinal section;

Figure 8 - the same parts in the process of extraction of the old pipeline when transmitting reactive forces onto the new pipeline, longitudinal section.

Preferred Embodiment of the Invention

The method of trenchless replacement of the pipeline is effected as follows.

The new pipeline is arranged coaxially outside the old pipeline, and then the latter is extracted. Such an arrangement of the new pipeline facilitates separation of the latter from the surrounding soil mass, eases the process of its extraction and makes it more reliable.

In laying a new pipeline whose diameter is close to that of the old one, the method is realized as follows.

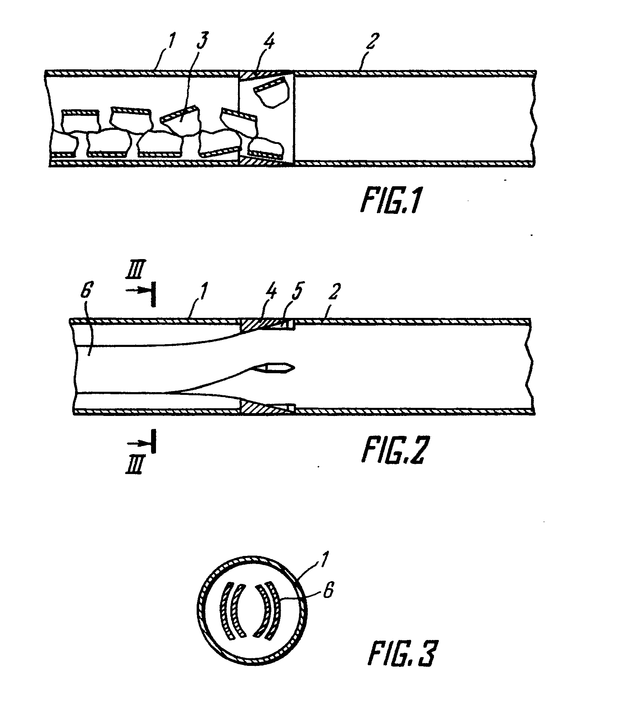

The laying of a new pipeline 1 (Fig. 1) is realized by sinking it into the ground along the axis of the old pipeline 2. Sinking of the new pipeline 1 may be done under the action of a static or dynamic, preferably, impact load by means of a pneumatic earth puncher. Prior to laying the new pipeline 1, the old pipeline 2 is destroyed. Pipelines made from brittle materials (ceramics, cast iron) are broken into fragments 3 of an arbitrary form. Destruction of the old pipeline 2 may be done by means of a special mechanism or, as is shown in Fig. 1, by way of transmitting a breaking load to it through the new pipeline 1 whose front end face is fitted with a special headpiece 4 which is in contact with the old pipeline 2 and destroys the latter when the new pipeline 1 is in motion; fragments of the destroyed pipeline pass through the headpiece 4 and get inside the new pipeline 1, wherefrom they are later extracted.

To extract fragments 3 of the old pipeline 2 from the new pipeline 1, use can be made of a hydraulic or pneumatic conveyer, a self-propelled soil-removing device, a scraper, etc.

When driving the new pipeline 1 into the ground by way of application of an impact load thereto, it is possible to select such conditions of loading the pipeline 1 with reference to elastic properties of the soil, which would bring about "self-conveying", i.e. transportation of fragments 3 to the rear end face of the pipeline 1 and their removal therefrom only under the action of an impact load.

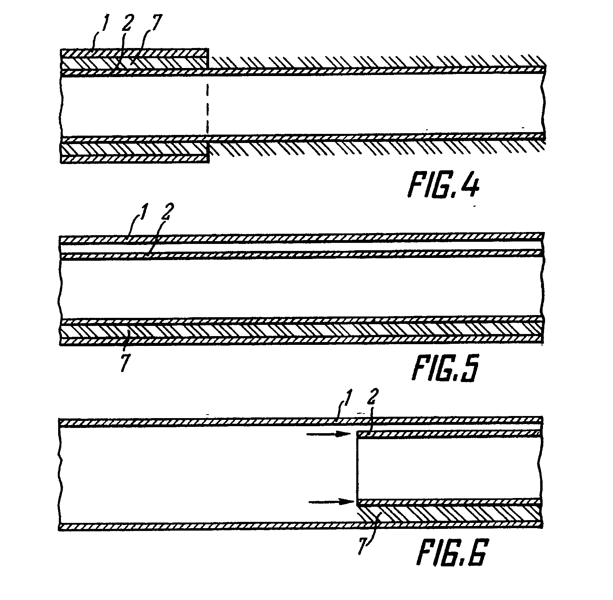

When replacing a pipeline made from plastic materials, for example, a polyethylene pipeline, destruction of the old pipeline 2 (Fig. 2) is effected by means of a headpiece 4 fitted with knives 5 which, along with the forward motion of the new pipeline 1, cut the old pipeline 2 into longitudinal elements 6 which get inside the new pipeline 1 (Fig. 3) and are removed therefrom on completing the laying of the pipeline 1 throughout the whole length of the replaced part of the pipeline. Removal of the old pipeline 2 divided into longitudinal elements 6 and arranged inside the new pipeline is effected by any known method.

In laying a new pipeline 1 (Fig. 4) whose diameter exceeds that of the old pipeline 2, the new pipeline 1 provided with an open front end face is driven into the ground by way of subjecting it to the action of a static or dynamic load, and arranging it outside the old pipeline 2, In this case a layer of soil 7 is formed between the old and new pipelines 2 and 1. To reduce friction forces of the new pipeline 1 against the soil layer 7, the front end face of the new pipeline may be fitted with special knife headpieces which force part of soil into the surrounding soil mass. Prior to the extraction of the old pipeline 2 from the new pipeline 1, the soil layer 7 is separated from the old pipeline 2.

Separation of the soil layer 7 from the old pipeline 2 is effected mainly by way of subjecting the old pipeline 2 to the action of a longitudinal or lateral impact, vibratory-impact or a vibratory load. It is also possible to effect destruction of structural properties in the soil layer 7 and separation of it from the old pipeline by way of subjecting it to a dynamic action on the new pipeline 1 or by way of hydraulic wash-out.

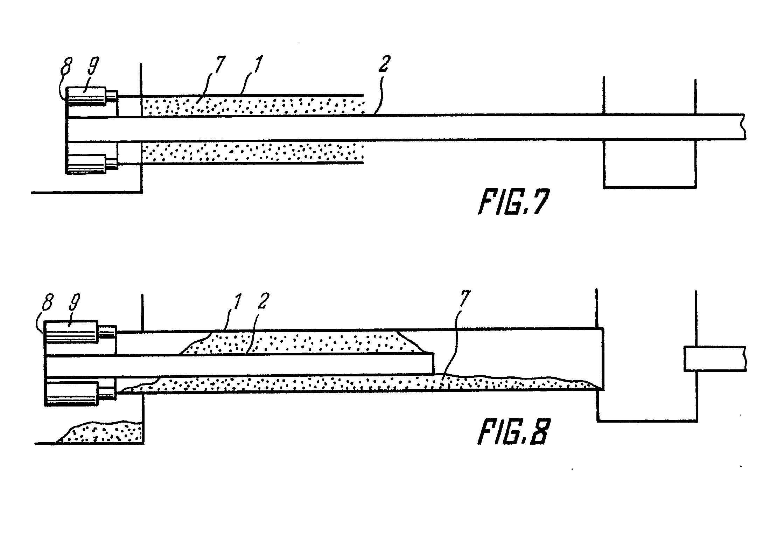

Arrangement of the old pipeline 2 inside the new one (Fig. 5) and separation of the soil layer 7 therefrom considerably simplifies the prosess of removal of the old pipeline, making said process more reliable.

Removal of the old pipeline (Fig. 6) is effected by way of subjecting it to the action of an axial, static or dynamic load. The dynamic load can be created by a percussion or percussion-vibratory mechanism, for example, a pneumatic earth puncher, attached to the end face of the old pipeline 2.

Upon extracting the old pipeline 2 from the new pipeline 1, the leftovers of the soil layer 7 are removed by any known method, for example, by means of a self-propelled soil-removing device, a scraper or by hydraulic wash-out.

When laying a new pipeline 1 (Fig. 7) by way of subjecting it to the action of a static load, reactive forces are transmitted to the old pipeline 2. For this purpose, a flange 8 is secured on the old pipeline 2, while hydraulic jacks 9 which create a static load are installed between the flange 8 and the end face of the new pipeline 1. When the hydraulic jacks 9 are engaged, the new pipeline 1 is driven into the soil. Reactive forces from the hydraulic jacks 9 are transmitted through the flange 9 to the old pipeline 2, which excludes the necessity of arranging a retaining wall or anchoring devices. In creating a static load not by means of hydraulic jaoks, but by means of other mechanisms, for example, tackle blocks, they are located between the old and new pipelines so that reactive forces are transmitted to the old pipeline 2.

In driving the new pipeline 1 into the soil by way of subjecting it to the action of a static load, the dynamic action should be applied periodically (for example, prior to adding each section of it) or constantly (by way of application of an axial or lateral dynamic load). The abovementioned action reduces possibility of formation of a soil plug in the soil layer 7, destroys such plugs in case of their formation and leads to removing part of the soil layer 7 in the process of driving-in the new pipeline 1. This reduces the efforts required for laying the new pipeline 1.

When extracting the old pipeline 2 (Fig. 8) by way of subjecting it to the action of a static load, reactive forces are transmitted to the new pipeline 1. This operation is effected by the same mechanism which was used for laying the new pipeline 1, for example, hydraulic jacks 9 located between the end face of the new pipeline and flange 8 secured on the old pipeline 2. Upon separating the soil layer 7 from the old pipeline 2, the effort necessary for extraction of the old pipeline 2 is decreased and becomes less than cohesive forces of the new pipeline 1 with the soil, therefore, when the jacks 9 are engaged, the new pipeline 1 remains in its place, while the old pipeline is extracted. As it is being extracted, the flange 8 perioodically moves along the old pipeline 2, and its extracted section is separated from that located inside the new pipeline 1.

Transmission of reactive forces to the new pipeline 1 makes it possible to eliminate the necessity of erecting a retaining wall or anchor devices.

When extracting the old pipeline 2 by means of a static load, it is subjected to a periodic or constant action of the axial or lateral dynamic load. Such an effect decreases a possibility of formation of a soil plug in the soil layer 7, and destroys such plugs in case of their formation. This decreases the efforts necessary for extraction of the old pipeline 2. Upon completing the extraction of the old pipeline 2, the soil remaining in the pipeline 1 is removed by means of any known method, for example, by means of a self-propelled soil-removing device, by a scraper unit or by a hydraulic washout.

For a better understanding of the present invention given hereinbelow are the examples of its specific embodiment.

Example 1

Replaced is an old pipeline made from ceramic pipes (200 mm in diameter) with a new pipeline made from steel pipes of the same diameter.

The new pipeline 1 (Fig. 1) is arranged in the direction of the axis of the old pipeline 2; on the front end face (directed towards the old pipeline) of the new pipeline 1 secured is a special headpiece with an inner tapered hole whose maximum diameter is approximately equal to or slightly exceeds the outer diameter of the old pipeline 2.

Connected to the rear end face of the first section of the new pipeline 1 through a tapered bushing is a pneumatic earth puncher of a percussion type (not shown in the drawing). Under the action of an impact load created by the pneumatic earth puncher, the new pipeline 1 is driven into the soil along the axis of the old pipeline 2. In this case, a special head-piece 4 which moves together with the new pipeline 1 interacts with the old pipeline 2.

The new pipeline 1 and the special headpiece 4 transmit the impact load to the old pipeline 2. Under the action of this impact load, the old pipeline 2 is broken into fragments 3 of an arbitrary form. These fragments 3 pass through a special headpiece 4 inside the new pipeline 1, being uniformly distributed along the new pipeline under the action of its longitudinal vibrations caused by an impact load and elastic forces of the soil.

The new pipeline 1 is driven into the soil by sections, since the replaced portion of the pipeline has a great length. Upon driving the first section of the new pipeline 1 into the soil the pneumatic earth puncher is disconnected from its rear end face and, with the aid of a self-propelled soil-removing device, fragments 3 of the old pipeline 2 are extracted from the new pipeline 2. Thereafter, using electric welding for the purpose, connected to the first section of the new pipeline 1 is the second section, attached to which is the pneumatic earth puncher and the work is continued in such cycles until the new pipeline 1 is laid throughout the whole length of the replaced part and its complete cleaning from fragments 3 of the old pipeline 2. Location of fragments 3 of the old pipeline 2 inside the new pipeline 1 makes it possible to prevent contamination of the surrounding soil mass and underground waters with remaining material conveyed through the old pipeline 2, to ease, simplify and make the process of extraction of the old pipeline more reliable.

Example 2

An old plastic pipeline 2 is replaced with a new plastic pipeline 1 of the same diameter (Fig. 2).

The new pipeline 1, provided on its front end face with a headpiece 4 with knives 5, is driven into the soil under the action of a static load created by a hydraulic jack. When the new pipeline 1 is in motion, knives 5 of the headpiece 4 divide the old pipeline 2 into longitudinal elements 6 and direct them inside the new pipeline 1 (Fig. 3). The new pipeline 1 is laid throughout the whole length of the replaced part, after which the old pipeline 2 in the form of longitudinal elements 6 is extracted (pulled out) from the new pipeline 1.

When extracting the longitudinal elements 6 from the new pipeline 1 under the action of a static load, use is made of the same hydraulic jack, which was used for driving the new pipeline 1 into soil and which is attached to the rear end face of the new pipeline 1 and to longitudinal elements 6.

In this case reactive forces in the process of extraction of longitudinal elements 6 are conveyed to soil through a new pipeline 1, and there is no need in the arrangement of anchor systems.

Example 3

A steel pipeline 2 is replaced with a steel pipeline 1 whose diameter is greater than that of the replaced pipeline 2.

The work is performed in the following sequence:

The new pipeline 1 is driven into soil (Fig. 4) by subjecting it to the action of a dynamic impact load, which is transmitted to the pipeline by means of a pneumatic machine of a percussion type (pneumatic earth puncher) attached to the rear end face of the new pipeline 1.

The new pipeline 1 is driven into soil in such a way that in its motion it embraces the old pipeline 2 and is located outside the latter. As the new pipeline 1 sinks into soil, a soil layer 7 is formed between its walls and those of the old pipeline 2.

Under the action of the impact load and elastic forces of the soil mass surrounding the new pipeline 1, the latter performs reciprocating motions. This reciprocation of the new pipeline 1 is transmitted to the soil layer 7, destroying its structural connections and separating it from the old pipeline 2.

Under certain conditions of loading, the soil layer 7 starts movement in the direction opposite to that of the new pipeline 1 and is removed from the clearance between the pipelines.

This facilitates laying the new pipeline and subsequently promotes the extraction of the old one. The intensity of destruction of the soil layer 7 depends on the conditions of impact loading of the new pipeline 1 which is periodically varied.

If the length of the replaced part of the pipeline is considerable, a new pipeline is laid by extending it with separate sections, as it is driven into soil. Upon laying the new pipeline 1 (Fig. 5) throughout the whole length of the replaced part, the pneumatic earth puncher is disconnected from the new pipeline 1 and connected to the old pipeline 2. When the pneumatic earth puncher starts operation, the process of intensive separation of the soil layer 7 from the old pipeline 2 is resumed, and then the old pipeline 2 (Fig. 6), under the action of an impact load, starts movement leaving the new pipeline 1. As it comes out the old pipeline is cut into pieces by means of gas cutting and removed.

On completing the removal of the old pipeline 2 from the new pipeline 1, the remaining soil is removed from the new pipeline 1 by means of a scraper unit.

Example 4

A steel pipeline 2 is replaced by a pipeline 1 made from asbestos-cement pipes whose diameter exceeds that of the replaced pipeline.

Sinking of the new pipeline 1 (Fig. 7) is effected through the action of a static load. For this purpose, a flange 8 is secured on the end of the old pipeline 2, and installed between the flange 8 and the first section of the new pipeline 1 are hydraulic jacks 9 by means of which the new pipeline 1 is driven into soil.

In this case reactive forces are transmitted to the oild pipeline 2, which eliminates the necessity of making a retaining wall or anchor devices. As the pipeline 1 is driven into soil, it is being extended with separate sections. Upon completing the laying of the new pipeline 1 throughout the whole length of the replaced part, hydraulic jacks 9 and flange 8 are dismantled and a pneumatic earth puncher is attached to the end face of the old pipeline 2; the dynamic action of the pneumatic earth puncher on the old pipeline 2 separates the soil layer 7 from the latter. Then the old pipeline 2 (Fig. 6) is extracted from the new pipeline 1. The remaining soil is removed by hydro-transport.

Example 5

A plastic pipeline 2 is replaced by a steel pipeline 1 whose diameter exceeds that of the plastic pipeline.

The new pipeline 1 is driven into soil by means of a pneumatic earth puncher, as described in Example 3. In this case a soil layer 7 under the action of a dynamic load is destroyed and separated from the old pipeline 2. Then a flange 8 is secured on the end face of the old pipeline 2 (Fig. 8), and installed between the flange 8 and the end face of the new pipeline 1 are hydraulic jacks 9 which extract the old pipeline 2, transmitting reactive forces to the new pipeline 1. As the old pipeline is extracted, the flange 8 is carried over and secured on a new part of the old pipeline 2, while the extracted part of the old pipeline 2 is cut off by an incandescent wire filament, and the remaining soil is removed from the new pipeline 1 by compressed air.

Industrial Applicability

The present invention can be most efficiently used in replacement of underground utility lines, sewer pipes, and the like.

The present invention can also be used for repair and reconstruction of underground engineering service lines.

**Claims**

1. A method for trenchless replacement of a pipeline, comprising laying of a new pipeline (1) and simultaneous extraction of an old pipeline (2) from soil (7) along with its destruction, characterized in that the new pipeline (1) is arranged coaxially with the old pipeline (2) and outside it, whereupon the old pipeline (2) is extracted.

2. A method for trenchless replacement of a pipeline according to Claim 1, characterized in that when laying the new pipeline (1) whose diameter is close to that of the old pipeline (2), prior to arranging the new pipeline (1) outside the old pipeline (2), the latter is destroyed.

3. A method for trenchless replacement of a pipeline according to Claim 2, characterized in that the destruction of the old pipeline (2) is accomplished by way of cutting it into longitudinal elements (6).

4. A method for trenchless replacement of a pipeline according to Claim 2, characterized in that the destruction of the old pipeline (2) is effected by way of transmitting a breaking load thereto through the new pipeline (1).

5. A method for trenchless replacement of a pipeline according to Claim 1, characterized in that when laying the new pipeline (1) whose diameter exceeds that of the old pipeline (2), a soil layer (7) which formed between said pipelines (1, 2) is separated from the old pipeline (2) prior to its extraction,

6. A method for trenchless replacement of a pipeline according to Claim 5, characterized in that the soil layer (7) is separated from the old pipeline (2) in the process of laying the new pipeline (1).

7. A method for trenchless replacement of a pipeline according to Claims 1 or 5 or 6, characterized in that in laying the new pipeline (1) by way of subjecting it to the action of a static load, the reactive forces are transmitted to the old pipeline (2).

8. A method for trenchless replacement of a pipeline according to Claims 1 or 5 or 6, characterized in that when extracting the old pipeline (2) by way of subjecting it to the action of a static load, the reactive forces are transmitted to the new pipeline (1).

9. A method for trenchless replacement of a pipeline according to Claim 7, characterized in that when extracting the old pipeline (2) by way of subjecting it to the action of a static load, the reactive forces are transmitted to the new pipeline (1).

10. A method for trenchless replacement of a pipeline according to Claim 7, characterized in that when laying the new pipeline (1), it is subjected to the action of a dynamic load.

11. A method for trenchless replacement of a pipeline according to Claim 8, characterized in that when extracting the old pipeline (2), it is subjected to the action of a dynamic load.

FIG.1

FIG.2

FIG.3

FIG.4

FIG.5

FIG.6

FIG.7

FIG.8

# INTERNATIONAL SEARCH REPORT

International Application No PCT/SU 90/00205

**I. CLASSIFICATION OF SUBJECT MATTER** (if several classification symbols apply, indicate all) [6]

According to International Patent Classification (IPC) or to both National Classification and IPC

IPC[5] - F16L 1/028

**II. FIELDS SEARCHED**

Minimum Documentation Searched [7]

| Classification System | Classification Symbols |
|---|---|
| IPC[5] | F16L 1/024, 1/028 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with Indication, where appropriate, of the relevant passages [12] | Relevant to Claim No. [13] |
|---|---|---|
| A | US, A, 4507019 (ALAN E.THOMPSON), March 26, 1985 (26.03.85) | 1-11 |
| A | GB, A, 2123111 (BRITISH GAS CORPORATION), January 25, 1984 (25.01.84) | 1-11 |
| A | SU, AI, 1204665 (KUZBASSKY POLITEKHNICHESKY INSTITUT), January 15, 1986 (15.01.86) | 1-11 |
| A | SU, AI, 802464 (INSTITUT GORNOGO DELA SIBIRSKOGO OTDELENIA AN SSSR), February 15, 1981 (15.02.81) | 1-11 |
| A | SU, AI, 1507925 (INSTITUT GORNOGO DELA SO AN SSSR), September 1989 (15.09.89) | 1-11 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| November 27, 1990 (27.11.90) | December 18, 1990 (18.12.90) |

| International Searching Authority | Signature of Authorized Officer |
|---|---|
| ISA/SU | V.Belov |

Form PCT/ISA/210 (second sheet) (January 1985)

See notes on accompanying sr